**Europäisches Patentamt**

**European Patent Office**

**Office européen des brevets**

(19)

(11) Veröffentlichungsnummer : **0 120 380 B1**

(12) # EUROPÄISCHE PATENTSCHRIFT

(45) Veröffentlichungstag der Patentschrift :
20.08.86

(51) Int. Cl.⁴ : **F 16 K 17/14**

(21) Anmeldenummer : **84102607.3**

(22) Anmeldetag : **09.03.84**

(54) **Sicherheitseinrichtung gegen unzulässigen Druck in einem Behälter.**

(30) Priorität : 24.03.83 DE 3310782

(43) Veröffentlichungstag der Anmeldung :
03.10.84 Patentblatt 84/40

(45) Bekanntmachung des Hinweises auf die Patenterteilung : 20.08.86 Patentblatt 86/34

(84) Benannte Vertragsstaaten :
**AT CH DE FR GB IT LI SE**

(56) Entgegenhaltungen :
DE-A- 2 540 597
DE-A- 2 706 723
DE-A- 2 828 341
DE-C- 568 051
FR-A- 1 595 660
FR-A- 2 044 512
FR-A- 2 252 519
FR-A- 2 355 226
US-A- 1 970 718
US-A- 2 079 164
US-A- 3 279 647
US-A- 3 482 732

(73) Patentinhaber : **Siemens Aktiengesellschaft Berlin
und München
Wittelsbacherplatz 2
D-8000 München 2 (DE)**

(72) Erfinder : **Voigtländer, Kurt
Tulpenhofstrasse 24
D-6050 Offenbach/Main (DE)**

Jouve, 18, rue St-Denis, 75001 Paris, France

## Beschreibung

Die Erfindung bezieht sich auf eine Sicherheitseinrichtung gegen unzulässigen Druck in einem Behälter nach dem Oberbegriff des Anspruches 1.

Sicherheitseinrichtungen gegen unzulässigen Druck in einem Behälter sind bereits mannigfach bekannt. Außer Ventilen gibt es unter anderem Einrichtungen, die bei unzulässigem Druck aufreißende Dünnstellen aufweisen, mit ebenen oder konkav-konvexen Berstscheiben ausgerüstet sind, Scherpfropfen besitzen oder durch Sprengkraft zerstörbare Verschlußelemente enthalten.

Je nach Erfordernissen, werden vielfach auch Sicherheitseinrichtungen verwendet, die jeweils mit einem konkav-konvexen, membranartigen Verschlußelement versehen sind, das sich bei unzulässigem Druck an eine Schneideinrichtung anlegt und von dieser aufgeschnitten wird. Diese Einrichtungen arbeiten jedoch nur bei einer verhältnismäßig großen Anstiegsgeschwindigkeit des auf das Verschlußelement wirkenden Druckes einwandfrei. Bei schleichend ansteigendem Druck wird die zum Durchschneiden des Verschlußelements erforderliche Mindestschneidarbeit regelmäßig nicht erreicht. Die bekannten Sicherheitseinrichtungen, bei denen die Verschlußelemente durch den anstehenden Druck im Behälter, unter Änderung ihrer Form, gegen eine Schneideinrichtung gedrückt werden, müssen äußerst präzise gefertigt sein und erfordern neben der genügend hohen Geschwindigkeit des Druckanstieges eine besondere Geometrie sowie besondere Materialeigenschaften des Verschlußelementes, wenn sie zufriedenstellend arbeiten sollen (DE-A-28 28 341, 27 06 723, 25 40 597).

Es ist auch eine Sicherheitseinrichtung gegen unzulässigen Druck in einem Behälter nach dem Oberbegriff des Anspruches 1 bekannt. Bei einem Ausführungsbeispiel dieser, in der Art eines Ventils aufgebauten Sicherheitseinrichtung, steht der Innendruck des Behälters an einer Seite des Verschlußelementes an. Auf der Gegenseite des Verschlußelementes liegt ein Ventilteller an, der unter dem Druck einer Feder steht und Schneidpunkte zum Aufschneiden des Verschlußelementes aufweist. Gemäß einem zweiten Ausführungsbeispiel, kann bei der bekannten Sicherheitseinrichtung die Feder entfallen und der Ventilteller in der Art eines Stempels ausgebildet sein, dessen freies Schaftende an einer beidendig eingespannten Querstange angreift, die auf ihrer Rückseite eine Solldruckstelle aufweist. Unter der Voraussetzung, daß der Stempel nach dem zweiten Ausführungsbeispiel mit Schneidpunkten nach dem ersten Ausführungsbeispiel versehen ist, arbeitet die bekannte Sicherheitseinrichtung so, daß sich das Verschlußelement bei unzulässigem Druck im Behälter an die Schneidpunkte anlegt und durch diese aufgeschnitten wird und die Querstange an der dafür vorgesehenen Stelle bricht, so daß der Stempel den ganzen Ventilquerschnitt für eine Druckentlastung frei gibt. Auch hier ist jedoch eine verhältnismäßig große Geschwindigkeit des Druckanstieges im Behälter erforderlich, wenn die Schneidpunkte zur Wirkung kommen sollen. Bei schleichend ansteigendem Druck legt sich das Verschlußelement an die Schneidpunkte an, ohne aufgeschnitten zu werden. Die Anordnung ist so getroffen, daß nur ein rundes, ausbiegbares Verschlußelement verwendbar ist (US-A-20 79 164).

Bei einer weiteren Sicherheitseinrichtung gegen unzulässigen Druck in einem Behälter, ist ebenfalls ein Verschlußelement der im Oberbegriff des Anspruches 1 genannten Art vorgesehen. Wenn Überdruck auftritt, ist dieses Verschlußelement durch eine rohrförmige Schneideinrichtung aufschneidbar, die durch einen Kipphebel in der Ausgangslage gehalten ist und unter dem Druck einer Feder steht. Der Kipphebel ist durch eine aufwendige Manostateinrichtung zur Freigabe der Schneideinrichtung aus seiner Ausgangslage ausschwenkbar. Die Anordnung ist träge (FR-A-20 44 512).

Ferner ist eine Sicherheitseinrichtung gegen unzulässigen Druck in einem Behälter bekannt, bei der ein Verschlußelement der im Oberbegriff des Anspruches 1 genannten Art mit einem Kippmesser aufschneidbar ist. Das Kippmesser ist bei auftretendem Überdruck in die Kipplage durch eine Betätigungsstange auslenkbar, die an einer in ihrem Rücken angeordnete unter dem Druck im Behälter stehende Membrane angreift. Diese bekannte Sicherheitseinrichtung ist sehr aufwendig. Die Schneideinrichtung wird nur kraftschlüssig in der Ausgangslage gehalten (US-A-32 79 647).

Eine ebenfalls bekannte Sicherheitseinrichtung gegen unzulässigen Druck in einem Behälter arbeitet so, daß eine ringförmige, Zweilagen-Schnappfeder ein hohlzylindrisches Messer gegen einen an einer als Verschlußelement ausgebildeten Membrane anstehenden Druck eines Mediums in ihrer einen Schnapplage hält. Wenn der Druck die Kraft der Schnappfeder überschreitet, baucht sich die Membrane aus und bewegt über Zwischenglieder die Schnappfeder in ihre andere Schnapplage. Die Schnappfeder stößt, dabei das Messer gegen die Membrane, wodurch diese zerstört wird und die erstrebte Druckentlastung erfolgt (US-A-34 82 732).

Aufgabe der Erfindung ist es, die im Oberbegriff des Anspruches 1 angegebene Sicherheitseinrichtung gegen unzulässigen Druck in einem Behälter so auszubilden, daß sie auch bei schleichendem Anstieg des auf das Verschlußelement wirkenden Druckes ihre Sicherheitsaufgabe einwandfrei erfüllt, daß sie einfach aufgebaut ist, daß die Geometrie ihres Verschlußelementes weitgehend frei wählbar ist und daß das Verschlußelement, außer der Verschlußaufgabe, ständig inaktiv bleibt, so daß an seine Materialeigenschaften, abgesehen von der mechanischen Festigkeit und der Korrosionsfestigkeit, keine besonderen Anforderungen gestellt werden müssen.

Die gestellte Aufgabe wird erfindungsgemäß durch die im kennzeichnenden Teil des Anspruches 1 angegebene Ausbildung gelöst.

Die gefundene Lösung zeichnet sich dadurch aus, daß beim Erreichen der Druckgrenze die Schneideinrichtung nicht schleichend sondern plötzlich, mit dem gewünschten Ergebnis aktiv wird.

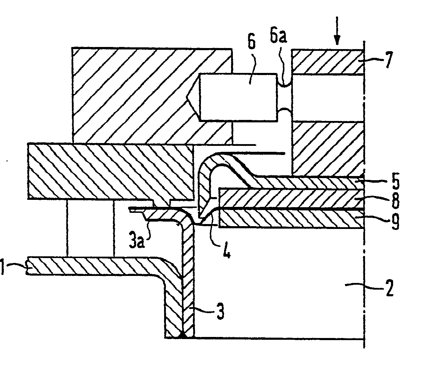

Ein Ausführungsbeispiel des Erfindungsgegenstandes ist in der Zeichnung rein schematisch dargestellt, die im Schnitt einen Aufriß einer Sicherheitseinrichtung zeigt, bei der alle wesentlichen Elemente formschlüssig miteinander verbunden sind.

In der Zeichnung ist mit 1 eine Behälterwand bezeichnet, in der eine Druckentlastungsöffnung 2 vorgesehen ist.

In der Druckentlastungsöffnung 2 ist gasdicht ein Rahmen 3 eingeschweißt, der einen nach außen umgebogenen Rand 3a aufweist. Auf dem Rand 3a ist ein aus einer Metallfolie bestehendes Verschlußelement 4 gasicht angeschweißt, das die Druckentlastungsöffnung 2 verschließt.

Mit 5 ist eine aus einem einzigen Messer bestehende Schneideinrichtung bezeichnet, mit der bei Erreichen einer vorgegebenen Druckgrenze das Verschlußelement 4 aufschneidbar ist, um einen Druckausgleich beidseits des Verschlußelementes 4 zu erreichen.

Die Schneideinrichtung 5 ist durch ein ortsfest eingespanntes Halteglied 6 in der Ausgangslage gehalten. Anstelle nur eines Haltegliedes 6 können auch mehrere Halteglieder 6 verwendet werden (nicht dargestellt).

Das Halteglied 6 ist über ein Zwischenglied 7 mit der Schneideinrichtung 5 formschlüssig verbunden, welche ihrerseits mit dem Verschlußelement 4 über eine Platte 8 verbunden ist. Das Verschlußelement 4 ist zwischen der Platte 8 sowie einer weiteren Platte 9 eingespannt.

Die Platten 8 und 9 erstrecken sich nur soweit, daß zwischen dem Rahmen 3 und ihnen noch Platz für den Angriff der Schneideinrichtung 5 ist.

Das Halteglied 6 ist ferner mit einer im dargestellten Beispiel aus einer Ringnut bestehenden Sollbruchstelle 6a versehen, die beim Erreichen der vorgegebenen Grenze des auf die Gesamtanordnung wirkenden Druckes durchbricht.

Wirkungsweise :

Unterhalb der vorgegebenen Druckgrenze bleibt die gesamte Anordnung in Ruhe.

Sobald die vorgegebene Druckgrenze erreicht ist, bricht das Halteglied 6 an der Sollbruchstelle 6a plötzlich durch. Der in Pfeilrichtung wirkende Druck stößt daraufhin die Schneideinrichtung 5 gegen das Verschlußelement 4, welches unter dem Angriff der Schneideinrichtung durchgeschnitten wird. Anschliessend strömt das Druckmedium solange aus der Druckentlastungsöffnung 2 aus, bis sich vor- und hinter dem Verschlußelement 4 ein Druckausgleich einstellt.

**Patentansprüche**

1. Sicherheitseinrichtung gegen unzulässigen Druck in einem Behälter, mit einem eine Druckentlastungsöffnung (2) einer Behälterwand (1) hermetisch abschließenden, schneidbaren Verschlußelement (4), einer gegen das Verschlußelement (4) gerichteten Schneideinrichtung und mindestens einem die Schneideinrichtung (5) unterhalb einer vorgegebenen Druckgrenze in einer Ausgangslage haltenden starren Halteglied (6), das unter dem Innendruck des Behälters steht und eine beim Überschreiten der vorgegebenen Druckgrenze durchbrechende Sollbruchstelle (6a) aufweist, gekennzeichnet durch die Merkmale :

1.1. das Halteglied (6) ist, erforderlichenfalls unter Verwendung eines Zwischengliedes (7), starr mit der Schneideinrichtung (5) verbunden,

1.2. die Schneideinrichtung (5) ist starr mit einer Platte (8) verbunden,

1.3. das Verschlußelement (4) ist, unter Freilassen eines Randes für den Angriff einer Schneide der Schneideinrichtung (5), zwischen der Platte (8) und einer weiteren Platte (9) eingespannt,

1.4. das Halteglied (6), gegebenenfalls das Zwischenglied (7), die Schneideinrichtung (5) und die Platte (8) sind auf der vom Innendruck des Behälters beaufschlagten Seite des Verschlußelementes (4) angeordnet.

2. Sicherheitseinrichtung nach Anspruch 1, dadurch gekennzeichnet, daß das Verschlußelement (4) aus einer ringsum eingespannten Metallfolie besteht.

**Claims**

1. Safety device against inadmissible pressure in a container, having a rupturable closure element (4) which hermetically seals a pressure release aperture (2) of a container wall (1), a cutting device directed against the closure element (4), and at least one rigid retaining element (6) holding the cutting device (5) in a starting position below a predetermined pressure limit, which retaining element is under the internal pressure of the container and has a desired break point (6a) which breaks when the predetermined pressure limit is exceeded, characterised by the features :

1.1. the retaining element (6) is rigidly connected to the cutting device (5), if necessary using an intermediate element (7),

1.2. the cutting device (5) is rigidly connected to a plate (8),

1.3. the closure element (4) is clamped between the plate (8) and a further plate (9) leaving one edge free for engagement of a cutting edge of the cutting device (5),

1.4. the retaining element (6), if necessary the intermediate element (7), the cutting device (5) and the plate (8) are arranged on the side of the closure element (4) affected by the internal pressure of the container.

2. Safety device according to claim 1, characterised in that the closure element (4) comprises a metal foil which is clamped all round.


**Revendications**

1. Dispositif de sécurité vis-à-vis d'une pression inadmissible dans une cuve, comportant un organe de fermeture (4) pouvant être coupé, fermant hermétiquement une ouverture détente (2) ménagée dans une paroi (1) de la cuve, un dispositif de découpage dirigé contre l'organe de fermeture (4) et au moins un organe rigide de maintien (6) qui retient le dispositif de découpage (5) dans une position initiale, au-dessous d'une limite de pression prédéterminée et qui est soumis à la pression intérieure du récipient et possède un point de rupture imposée (6a) qui se rompt lors du dépassement de la limite de pression prédéterminée, caractérisé par les moyens suivants :

1.1. L'organe de maintien (6) est relié rigidement au dispositif de découpage (5), moyennant l'utilisation d'un organe intermédiaire (7) dans le cas où cela est nécessaire,

1.2. le dispositif de découpage (5) est relié rigidement à une plaque (8),

1.3. l'organe de fermeture (4) est serré entre la plaque (8) et une autre plaque (9), tout en laissant subsister, à l'état libre, un bord pour l'application d'un couteau du dispositif de découpage (5),

1.4. l'organe de maintien (6), éventuellement l'organe intermédiaire (7), le dispositif de découpage (5) et la plaque (8) sont montés sur une face de l'organe de fermeture (4) qui est chargée par la pression intérieure du récipient.

2. Dispositif de sécurité suivant la revendication 1, caractérisé par le fait que l'organe de fermeture (4) est constitué par une feuille métallique serrée sur son pourtour.